# FASCICULE DE BREVET EUROPEEN

(11) **EP 0 467 810 B1**
(45) Date de publication et mention de la délivrance du brevet: **21.06.1995**
(21) Numéro de dépôt: 91420257.7
(22) Date de dépôt: 16.07.1991
(51) Int. Cl.: C03C 27/00, C04B 37/04

(54) **Structure et procédé de scellement d'une enceinte verre/silicium**
Struktur und Verfahren zur Versiegelung eines Glas/Siliziumgefässes
Structure and process for sealing a glass/silicon enclosure

(30) Priorité: 20.07.1990 FR 9009469
(43) Date de publication de la demande: 22.01.1992
(73) Titulaire: SEXTANT Avionique, F-92366 Meudon la Forêt Cedex (FR)
(72) Inventeur: Thomas, Isabelle, F-26000 Valence (FR); Lefort, Pierre Olivier, F-26000 Valence (FR)
(74) Mandataire: de Beaumont, Michel

(56) Documents cités:
- EP-A- 0 250 948
- US-A- 4 294 602
- PATENT ABSTRACTS OF JAPAN, vol. 14, no. 396 (E-970), 27 août 1990;& JP-A-2 148 768 (MASAKI ESASHI) 07-06-1990

## Description

La présente invention concerne le scellement d'une enceinte comprenant une partie en silicium fermée par une plaque de verre. Des structures de ce type se trouvent actuellement dans de nombreux dispositifs de mesure dans lesquels on profite de l'expérience acquise dans la gravure et le traitement du silicium pour réaliser des micro-capteurs, tels que des micro-magnétomètres, des micro-accéléromètres, des micro-capteurs de pression, etc.

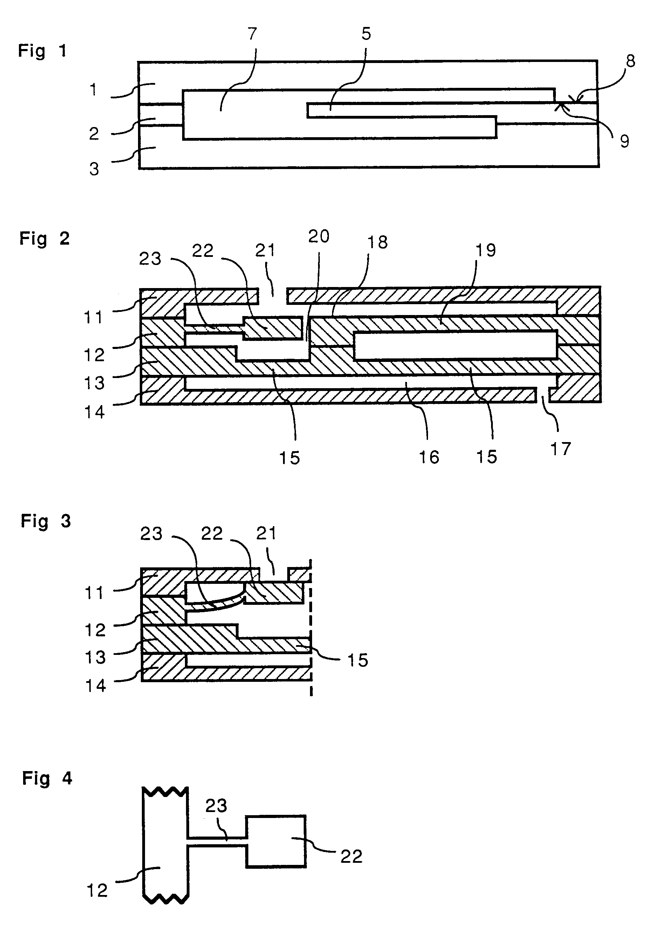

La figure 1 est destinée à illustrer le problème que l'invention vise à résoudre. Cette figure illustre un microcomposant fictif comprenant une plaque de verre supérieure 1 destinée à être soudée anodiquement sur une plaque de silicium 2 constituant la partie inférieure du composant seule ou en association avec une ou plusieurs autres plaques telles que la plaque de verre 3 représentée. A titre d'exemple, et sans que cela ne présente un caractère limitatif, on a montré de façon schématique que la plaque de silicium 2 comprend une partie interne 5 en surplomb, le micro-capteur servant par exemple à détecter des déplacements de cette lame mince 5 par suite de l'application d'une pression, d'une accélération ou d'un champ magnétique. Dans tous les cas, la cavité interne 7 du composant doit être sous atmosphère contrôlée, par exemple sous vide.

Le scellement de la cavité est obtenu en soudant, par soudure anodique, la périphérie inférieure 8 de la plaque de verre 1 à la périphérie supérieure 9 de la plaque de silicium 2. Pour cela, on doit d'abord poser la plaque 1 sur la plaque 2 selon un positionnement convenable et précis. En effet, les composants en cause ont couramment des dimensions extérieures en vue de dessus de l'ordre du millimètre.

En outre, alors qu'on a représenté en figure 1 un composant schématique individuel, de tels composants sont généralement fabriqués par lots à partir de tranches de silicium ayant des diamètres de 10 à 15 cm dont chacune comprend de façon répétitive la structure de chaque composant élémentaire et ces plaques sont ensuite assemblées, soudées puis découpées en composants individuels. On notera que ces plaques ont des faces supérieures et inférieure bien polies, notamment au niveau des périphéries des composants qui doivent être assemblés. Il en résulte qu'un collage optique apparaît immédiatement dès assemblage, même avant la soudure. En conséquence, il est difficile de faire le vide dans chacune des cavités des divers composants une fois que les plaques sont assemblées, même avant soudure. Ainsi, classiquement, on est amené à assembler les plaques dans une enceinte sous vide ce qui complique considérablement cette opération. Un autre moyen classique, consiste à prévoir une ouverture dans la plaque de verre supérieure et à boucher cette ouverture après l'opération de soudure anodique, dans une enceinte sous vide. Ce deuxième procédé implique également des manipulations complexes dans une enceinte sous vide.

Ainsi, un objet de la présente invention est de prévoir un procédé et une structure de composant permettant d'assembler les diverses plaques constituant le composant ou un ensemble de composants identiques, en atmosphère normale, par exemple dans une salle blanche tandis que l'on effectue une observation sous binoculaire, puis de placer ensuite le composant ou l'ensemble de composants dans une enceinte sous vide où, sans manipulation supplémentaire, on réalise simultanément la soudure anodique et le scellement des cavités.

Pour atteindre cet objet, la présente invention prévoit un procédé de scellement sous vide d'une cavité fermée par soudure anodique de la périphérie inférieure d'une plaque de verre contre la périphérie supérieure d'une plaque de silicium, comprend les étapes suivantes : prévoir dans la plaque de verre une ouverture en regard de ladite cavité ; prévoir dans la plaque de silicium une palette disposée en regard de l'ouverture, cette palette étant solidaire d'au moins une partie de la plaque de silicium par au moins une lamelle de silicium suffisamment mince pour être souple ; positionner en atmosphère normale la plaque de verre sur la plaque de silicium ; disposer le montage préassemblé dans une enceinte sous vide ; et appliquer une tension de soudage anodique entre la plaque de verre et la plaque de silicium, d'où il résulte que, tandis que ces plaques sont soudées, la palette vient s'appuyer contre la face inférieure de la plaque de verre au niveau de ladite cavité et se soude anodiquement à la périphérie de ladite ouverture.

La présente invention prévoit également une structure de scellement sous vide d'une cavité fermée par soudure anodique de la périphérie inférieure d'une plaque de verre contre la périphérie supérieure d'une plaque de silicium, dans laquelle la plaque de verre comprend, en regard de la cavité, une ouverture la traversant et la plaque de silicium comprend une palette disposée en regard de l'ouverture, cette palette étant solidaire d'au moins une partie de la plaque de silicium par au moins une lamelle de silicium suffisamment mince pour être souple.

Ces objets, caractéristiques et avantages ainsi que d'autres de la présente invention seront exposés plus en détail dans la description suivante de modes de réalisation particuliers faites en relation avec les figures jointes parmi lesquelles :
la figure 1, destinée à illustrer le problème posé, a été décrite précédemment ;
la figure 2, représente une vue en coupe d'un microcomposant incorporant la structure selon la présente invention, à l'état non scellé ;
la figure 3 représente une vue partielle du microcomposant de la figure 2, à l'état scellé ; et
la figure 4 représente une vue de dessus schématique de l'élément de scellement des figures 2 et 3.

La figure 2 représente très schématiquement un micro-capteur de pression. Celui-ci est constitué dans l'exemple représenté d'une plaque de verre supérieure 11, d'une première plaque de silicium 12, d'une deuxième plaque de silicium 13 et d'une plaque de verre inférieure 14. Dans la deuxième plaque de silicium 13 est formée une membrane 15 définissant avec la plaque de verre inférieure 14 une enceinte de mesure de pression 16 communiquant avec l'extérieur par une ouverture 17. Par ailleurs, les première et deuxième plaques de silicium 12 et 13 définissent ensemble un plot 18 à partir duquel s'étend, vers la périphérie de la première plaque de silicium une lame 19 qui est soumise à des contraintes qui dépendent du déplacement du plot 18. Un système d'électrodes permettra par exemple de déterminer la fréquence de résonance de cette lame 19 et donc la pression sur la membrane. Pour que le système fonctionne, il faut que la cavité 20 dans laquelle se trouve la lame 19 soit mise en atmosphère contrôlée, de préférence sous vide.

Selon la présente invention, pour permettre la mise sous vide et le scellement, on prévoit dans la plaque 11 une ouverture 21 et dans la première plaque de silicium 12 une palette 22 reliée au cadre de la plaque 12, ou à une pièce intermédiaire solidaire de ce cadre, par une lamelle de silicium 23.

La figure 2 représente un microcomposant alors que les diverses plaques le constituant ont été assemblées avec précision, par exemple à l'aide d'une binoculaire.

Ensuite, le composant est placé dans une enceinte sous vide munie de moyens pour assurer un scellement anodique, c'est-à-dire, par exemple, des moyens pour porter le composant ou l'ensemble de composants (formés sur des plaques de grandes dimensions destinées à être coupées après soudure) à une température de 400 à 500°C et des moyens pour appliquer une différence de potentiel de quelques centaines de volts entre la plaque de silicium 12 et la plaque de verre 11.

Ainsi, dans un premier temps, la cavité 20 est évacuée et, ensuite, quand on applique la tension de soudure anodique, la palette de silicium 22 est attirée par les forces électrostatiques contre la face inférieure de la plaque de verre 11 pour venir boucher l'ouverture 21 et une soudure anodique est réalisée en même temps que sont soudées les surfaces périphériques en regard des plaques 11 et 12. La figure 3 représente la structure selon l'invention une fois le scellement effectué.

La façon de former la palette 22 et la lamelle souple 23 n'est pas décrite en détail ici car les techniques pour obtenir une telle structure sont bien connues dans le domaine de la gravure du silicium et sont les mêmes techniques que celles utilisées pour conformer le reste de la plaque de silicium 12. A priori, dans une structure comprenant, comme cela est représenté en figure 2, une lame mince 19, la lamelle 23 sera fabriquée exactement comme cette lame mince 19.

Bien entendu, la présente invention est susceptible de diverses variantes en ce qui concerne notamment la forme de la lamelle 23 qui, au lieu d'être rectiligne comme cela est illustré en figure 4, pourra présenter des coudes pour améliorer sa souplesse, et la forme de la palette 22 qui pourra par exemple être circulaire. On pourra aussi prévoir plusieurs lamelles de liaison entre la palette 22 et diverses parties de la structure de la plaque de silicium 12.

## Revendications

1. Structure de scellement sous vide d'une cavité fermée par soudure anodique de la périphérie inférieure d'une plaque de verre (11) contre la périphérie supérieure d'une plaque de silicium (12), la plaque de verre comprenant, en regard de ladite cavité, une ouverture (21) la traversant, caractérisée en ce que la plaque de silicium comprend une palette (22) disposée en regard de ladite ouverture, cette palette solidaire d'au moins une partie de la plaque de silicium par au moins une lamelle (23) de silicium suffisamment mince pour être souple.

2. Procédé de scellement sous vide d'une cavité fermée par soudure anodique de la périphérie inférieure d'une plaque de verre (11) contre la périphérie supérieure d'une plaque de silicium (12), cette plaque de verre comportant une ouverture (21) en regard de ladite cavité, caractérisé en ce qu'il comprend les étapes suivantes :
prévoir dans la plaque de silicium une palette (22) disposée en regard de l'ouverture cette palette étant solidaire d'au moins une partie de la plaque de silicium par au moins une lamelle de silicium (23) suffisamment mince pour être souple ;
positionner en atmosphère normale la plaque de verre sur la plaque de silicium ;
disposer le montage préassemblé dans une enceinte sous vide ; et
appliquer une tension de soudage anodique entre la plaque de verre et la plaque de silicium, d'où il résulte que, tandis que ces plaques sont soudées, la palette vient s'appuyer contre la face inférieure de la plaque de verre au niveau de ladite cavité et se soude anodiquement à la périphérie de ladite ouverture.

## Claims

1. A structure for sealing a cavity under a vacuum by anodically soldering the lower periphery of a glass plate (11) with the upper periphery of a silicon plate (12), the glass plate comprising an aperture (21) facing said recess, characterized in that the silicon plate includes a pad (22) facing said aperture, said pad being integral with at least one portion of the silicon plate through at least one silicon strip (23) which is thin enough to be flexible.

2. A method for sealing a cavity under a vacuum by anodically soldering the lower periphery of a glass plate (11) with the upper periphery of a silicon plate (12), said glass plate having an aperture (21) facing said cavity, characterized in that it includes the following steps:
- providing in the silicon plate a pad (22) facing the aperture, said pad being integral with at least one portion of the silicon plate through at least one silicon strip (23) which is thin enough to be flexible;
- positioning in a normal atmosphere the glass plate over the silicon plate;
- disposing the preassembled structure into a vacuum chamber; and
- applying an anode soldering voltage between the glass plate and the silicon plate, whereby, whereas said plates are soldered, the pad moves against the lower surface of the glass plate at said recess and is anodically soldered at the periphery of said aperture.

## Patentansprüche

1. Vorrichtung zum Verschließen eines geschlossenen Hohlraums unter Vakuum durch anodisches Verschweißen des unteren Umfangs einer Glasplatte (11) mit dem oberen Umfang einer Siliziumplatte (12), wobei die Glasplatte gegenüber dem Hohlraum eine sie durchdringende Öffnung (21) aufweist, dadurch gekennzeichnet, daß die Siliziumplatte einen gegenüber der Öffnung angeordneten Anker (22) aufweist, wobei dieser Anker über mindestens eine zum Biegsamsein ausreichend dünne Siliziumlamelle (23) mit mindestens einem Teil der Siliziumplatte einstückig verbunden ist.

2. Verfahren zum Verschließen eines geschlossenen Hohlraums unter Vakuum durch anodisches Verschweißen des unteren Umfangs einer Glasplatte (11) mit dem oberen Umfang einer Siliziumplatte (12), wobei die Glasplatte gegenüber dem Hohlraum eine Öffnung (21) aufweist, dadurch gekennzeichnet, daß es die folgenden Schritte umfaßt: Bereitstellen eines gegenüber der Öffnung in der Siliziumplatte angebrachten Ankers (22), wobei der Anker über mindestens eine zum Biegsamsein ausreichend dünne Siliziumlamelle (23) mit mindestens einem Teil der Siliziumplatte einstückig verbunden ist;
Aufbringen der Glasplatte auf die Siliziumplatte unter Normaldruck;
Einbringen des vormontierten Aufbaus in eine unter Vakuum stehende Umhüllung; und
Anlegen einer anodischen Schweißspannung zwischen der Glasplatte und der Siliziumplatte, wodurch der Anker gegen die Unterseite der Glasplatte in Höhe der Öffnung gedrückt wird und anodisch an den Umfang der Öffnung geschweißt wird, während die Platten verschweißt werden.
